# DEMANDE DE BREVET EUROPEEN

(11) **EP 1 342 752 A1**
(43) Date de publication de la demande: **10.09.2003**
(21) Numéro de dépôt: 03290361.9
(22) Date de dépôt: 14.02.2003
(51) Int. Cl.: C08L 27/16, C08K 5/00

(54) **Compositions à base de polyfluorure de vinylidène**

(30) Priorité: 07.03.2002 FR 0202876
(71) Demandeur: Atofina, 92800 Puteaux (FR)
(72) Inventeur: Pascal, Thierry, 69390 Charly (FR); Schlund, Bruno, 69630 Chaponost (FR)
(74) Mandataire: Neel, Henry

(57) **Abrégé**

La présente invention concerne une composition souple et résiliente comprenant :
- au moins un homopolymère (A) de fluorure de vinylidène (VF2) ou un copolymère (A) de VF2 et d'au moins un autre monomère copolymérisable avec VF2, dans lequel pour 100 parties en poids de VF2 ledit monomère est présent en une quantité comprise entre 0 et 30 parties en poids,
- au moins un élastomère fluoré B,
- éventuellement un plastifiant C,
dans laquelle, d'une part, ladite composition comprend pour 100 parties en poids de A, de 0,5 à 10 parties en poids de B et de 0 à 10 parties en poids de C, avec la condition supplémentaire que la somme de B plus C soit de 0,5 à 10,5 parties en poids et, d'autre part, en ce que l'homopolymère ou le copolymère de fluorure de vinylidène (A) soit choisi de telle sorte qu'il possède un indice de fluidité, mesuré selon la norme ISO 1133 à 230 °C sous une charge de 5 kg, inférieur à 5 g /10 min et un module critique G_{c}, à l'intersection des modules de cisaillement à l'état fondu G' et G" mesuré à 190°C, compris entre 5 et 22 kPa.

Cette composition est notamment utilisée pour la fabrication de tuyaux pour véhiculer des hydrocarbures extraits de gisements pétroliers situés sous la mer (offshore) ou non (on-shore).

## Description

### [Domaine de l'invention]

La présente invention concerne le domaine des polymères et a pour objet des compositions à base de polyfluorure de vinylidène.

Les homopolymères et copolymères fluorés sont connus pour leur bonne tenue thermique, leur résistance chimique, notamment aux solvants, résistance aux intempéries et aux rayonnements, (UV, etc.), leur imperméabilité aux gaz et aux liquides, leur qualité d'isolants électriques. Ils sont notamment utilisés pour la fabrication de tuyaux pour véhiculer des hydrocarbures extraits de gisements pétroliers situés sous la mer (offshore) ou non (on-shore). Les hydrocarbures sont parfois transportés à des températures élevées (de l'ordre de 135 °C) et sous haute pression (par exemple 70 MPa). Lors du fonctionnement des installations, il se pose donc des problèmes aigus de résistance mécanique, thermique et chimique des matériaux mis en oeuvre. D'autres exigences viennent s'y ajouter avant ou après le service : ainsi, lors de leur élaboration, leur installation et/ou leur enlèvement, (débobinage-bobinage), les tuyaux peuvent subir des chocs et des efforts en flexion auxquels ils doivent également résister et ce, parfois, à des températures particulièrement basses (par exemple -35 °C).

### [l'art antérieur et le problème technique]

Pour tenter de faire face à ces exigences à court et long termes citées plus haut divers types de matériaux ont été proposés, comprenant généralement un ou plusieurs éléments métalliques garantissant la rigidité mécanique, par exemple un ruban d'acier spiralé, ainsi que diverses couches à base de compositions polymériques, assurant notamment l'étanchéité et l'isolation thermique. Ces compositions, souvent à base de polymères fluorés et notamment de poly (fluorure de vinylidène) (PVDF) semi-cristallin sont souvent plastifiées pour pallier un manque de souplesse, une faible déformation au seuil d'écoulement et une résilience insuffisante, ce qui a pour inconvénient l'extraction plus ou moins rapide des plastifiants par les hydrocarbures transportés, conduisant progressivement à une perte des propriétés apportées par la plastification (souplesse, résilience, etc.) s'accompagnant en général de phénomènes de retrait et limitant par conséquent la durée de vie des articles à base de ces compositions.

Afin de résoudre certains de ces problèmes, on a remplacé les polymères fluorés éventuellement plastifiés par des compositions polymériques comprenant un homopolymère de PVDF, un copolymère thermoplastique (et non pas un élastomère) de fluorure de vinylidène (VF2) et d'au moins un autre monomère fluoré (EP 608.939 et EP 608.940) et un plastifiant (EP 608.939). Cependant le contrôle rigoureux et précis de la morphologie de tels mélanges impose d'utiliser des appareillages complexes et onéreux rendant donc cette solution technique difficilement accessible ; on constate d'autre part que ces mélanges présentent une résilience limitée à basse température et une mauvaise résistance au gonflement par exemple au contact d'hydrocarbures et une tenue chimique inférieure à celle du PVDF seul et une extraction du plastifiant éventuel au contact de certaines substances chimiques. De plus l'homopolymère de PVDF ne représente que 60 à 80 % en poids de la composition dans le brevet EP 608039 et 25 à 75 % dans le brevet EP 608940.

Des particules d'élastomère ont également été incorporées au PVDF (FR 2.592.655 et FR 2.618.791) dans le but d'absorber les hydrocarbures liquides et de les fixer dans la masse du mélange, la proportion d'élastomère au sein du mélange ne devant pas dépasser 25 % de la masse totale. De tels mélanges présentent une résilience améliorée par rapport au PVDF seul, mais leur souplesse est insuffisante pour certaines applications envisagées et notamment pour le transport et/ou le stockage d'hydrocarbures gazeux car ce type de mélange est peu souple lorsqu'il n'est pas en contact direct avec les hydrocarbures liquides. FR 2.592.655 a décrit des mélanges contenant en sus au moins 10 % en poids de plastifiant, qui, s'ils possèdent à la fois la souplesse et la résistance au choc souhaitées, laissent tôt ou tard exsuder le plastifiant.

La demande de brevet EP 0714944 décrit des compositions comprenant une matrice de PVDF dans laquelle sont dispersés des nodules d'élastomères vulcanisés, éventuellement assouplis par des plastifiants. Ces compositions présentent une très bonne résistance au choc multiaxial mais la quantité d'élastomères de 26,6 ou de 50 parties en poids pour 100 parties en poids de PVDF 1000 (exemples 6 et 11 ) est si élevée que ces compositions manquent de stabilité thermique et chimique à 150°C. De plus, ces compositions ont l'inconvénient d'avoir une forte perméabilité sous pression et une mauvaise résistance à la décompression rapide de gaz chauds sous pression (« blistering »).

Le brevet WO 9856855 a proposé de résoudre les problèmes techniques évoqués ci-dessus et a pour objet une composition souple et résiliente comprenant :
- au moins un homopolymère (A) de fluorure de vinylidène (VF2) ou un copolymère (A) de VF2 et d'au moins un autre monomère copolymérisable avec VF2, dans lequel pour 100 parties en poids de VF2 ledit monomère est présent en une quantité comprise entre 0 et 30 parties en poids,
- au moins un élastomère B,
- au moins un plastifiant C,
caractérisée en ce que, d'une part, ladite composition comprend pour 100 parties en poids de A, de 0,5 à 10 parties en poids de B et de 0,5 à 10 parties en poids de C, avec la condition supplémentaire que la somme de B plus C soit de 1 à 10,5 parties en poids et, d'autre part, en ce que l'homopolymère ou le copolymère de fluorure de vinylidène A soit choisi de telle sorte qu'il possède un indice de fluidité, mesuré selon la norme ISO 1133 à 230 °C sous une charge de 5 kg, inférieur à 5 g /10 min et un module critique G_{c}, à l'intersection des modules de cisaillement à l'état fondu G' et G" mesuré à 190°C, compris entre 5 et 22 kPa, ladite composition présentant les propriétés suivantes :
un allongement au seuil d'écoulement εy supérieur à 11 %, un allongement à la rupture εr supérieur à 200 %, une résistance au choc à 23 °C supérieure à 50 kJ/m² et une résistance au choc à -30 °C supérieure à 10 kJ/m² mesurées selon la norme ISO 180-1982, une résistance à la rupture en flexion sur feuillard métallique gainé supérieure à 50 %, une perte massique Δp dans de l'air à 150 °C pendant 1 mois inférieure ou égale à 8 % et une variation massique Δp dans du pétrole (mélange équivolumique de cyclohexane, isooctane et de xylène) à 150 °C pendant 1 mois, qui n'est pas négative (ladite composition ne perd pas de poids dans le pétrole).

Le module critique G_{c} est déterminé à 190 °C à l'aide d'un spectromètre mécanique dynamique, par exemple de type Rheometrics RMS 800, en utilisant un viscosimètre plan-plan de diamètre 25 mm.

Dans ce brevet WO 9856855 l'élastomère B est soit à base d'une structure core shell (coeur écorce) polyacrylique soit à base d'une structure polysiloxane soit encore un NBR (nitrile butadiène rubber) et de plus il faut utiliser aussi un plastifiant. On vient de découvrir que si l'élastomère B est un élastomère fluoré la présence du plastifiant n'est plus strictement nécessaire pour obtenir les propriétés mécaniques requises et de plus la stabilité à l'air et au pétrole sont nettement améliorées.

### [Brève description de l'invention}

La présente invention concerne une composition souple et résiliente comprenant :
- au moins un homopolymère (A) de fluorure de vinylidène (VF2) ou un copolymère (A) de VF2 et d'au moins un autre monomère copolymérisable avec VF2, dans lequel pour 100 parties en poids de VF2 ledit monomère est présent en une quantité comprise entre 0 et 30 parties en poids,
- au moins un élastomère fluoré B,
- éventuellement un plastifiant C,
dans laquelle, d'une part, ladite composition comprend pour 100 parties en poids de A, de 0,5 à 10 parties en poids de B et de 0 à 10 parties en poids de C, avec la condition supplémentaire que la somme de B plus C soit de 0,5 à 10,5 parties en poids et, d'autre part, en ce que l'homopolymère ou le copolymère de fluorure de vinylidène (A) soit choisi de telle sorte qu'il possède un indice de fluidité, mesuré selon la norme ISO 1133 à 230 °C sous une charge de 5 kg, inférieur à 5 g /10 min et un module critique G_{c}, à l'intersection des modules de cisaillement à l'état fondu G' et G" mesuré à 190°C, compris entre 5 et 22 kPa.

Cette composition présente les propriétés suivantes :
un allongement au seuil d'écoulement εy supérieur à 9 %, un allongement à la rupture εr supérieur à 200 %, une résistance au choc à 23 °C supérieure à 46 kJ/m² et une résistance au choc à -30 °C supérieure à 10 kJ/m² mesurées selon la norme ISO 180-1982, une résistance à la rupture en flexion sur feuillard métallique gainé supérieure à 50 %, une perte massique Δp dans de l'air à 150 °C pendant 1 mois inférieure ou égale à 8 % et une variation massique Δp dans du pétrole (mélange équivolumique de cyclohexane, isooctane et de xylène) à 150 °C pendant 1 mois, qui n'est pas négative (ladite composition ne perd pas de poids dans le pétrole).

Après séjour dans de l'air à 150°C pendant 1 mois l'allongement à la rupture εr a diminué de moins de 10% alors que pour les compositions dans lesquelles l'élastomère B n'est pas un élastomère fluoré la diminution est de 12 à 25%.

Après séjour dans de l'air à 150°C pendant 12 mois l'allongement à la rupture εr a diminué de 0 à 20% alors que pour les compositions dans lesquelles l'élastomère B n'est pas un élastomère fluoré la diminution est de l'ordre de 50%.

Après séjour dans le pétrole à 150°C pendant 1 mois l'allongement à la rupture εr a soit augmenté soit est resté constant alors que pour les compositions dans lesquelles l'élastomère B n'est pas un élastomère fluoré la diminution est de 15 à 25%.

Le module critique G_{c} est déterminé à 190 °C à l'aide d'un spectromètre mécanique dynamique, par exemple de type Rheometrics RMS 800, en utilisant un viscosimètre plan-plan de diamètre 25 mm.

De préférence, ledit autre monomère dans le polymère A est présent en une quantité relative comprise entre 0 et 5 parties en poids.

De préférence, ledit autre monomère est un monomère fluoré.

Avantageusement, B est présent en une quantité relative de 0,5 à 5 parties en poids pour 100 parties en poids de A.

Avantageusement, C est présent en une quantité relative de 0,5 à 5 parties en poids pour 100 parties en poids de A.
Les polymères fluorés A des compositions selon l'invention sont choisis parmi les homopolymères ou copolymères de VF2 à cause de leur excellente inertie chimique en présence de pétrole ou gaz brut de gisement et de leur stabilité à haute température.

De préférence, les compositions selon l'invention comprennent 100 parties en poids d'homopolymère de fluorure de vinylidène, 2,1 parties en poids de B et 3,2 parties en poids de C, l'homopolymère étant choisi de façon à avoir un MFI mesuré à 230° C, de 0,7 et un module critique G_{c}, mesuré à 190° C, de 20 kPa.

### [Description détaillée de l'invention]

Les élastomères fluorés B utilisables dans le cadre de l'invention peuvent être choisis parmi les élastomères vrais ou les résines polymères servant de constituant de base pour l'obtention des élastomères vrais.

Les élastomères vrais sont définis par la norme ASTM, Special Technical Bulletin, n° 184 comme des matériaux susceptibles d'être étirés, à la température ambiante, jusqu'à deux fois leur propre longueur et qui, une fois relâchés après maintien sous tension pendant 5 minutes, reprennent à 10 % près, leur longueur initiale dans le même temps.

Les résines polymères servant de constituant de base pour l'obtention des élastomères vrais sont en général des produits amorphes ou à faible taux de cristallinité (phase cristalline inférieure à 20% en volume) présentant une température de transition vitreuse (Tg) inférieure à la température ambiante. Dans la plupart des cas, ces produits correspondent à des copolymères ou des terpolymères de Tg inférieure à 0°C pouvant comporter des fonctions réactives (éventuellement en présence d'additifs ) permettent de former l'élastomère vrai.

Les élastomères fluorés B sont avantageusement des copolymères du VF2 et d'au moins un autre monomère fluoré. A titre d'exemple de comonomère on peut citer le fluorure de vinyle; le trifluoroethylene; le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogène ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3-trifluoro- 1 -propene. On peut utiliser plusieurs comonomères.

A titre d'exemple d'élastomère B on peut citer les copolymères VF2/HFP dans lesquels les proportions en poids du VF2 sont entre 50 et 75% pour respectivement 50 à 25% d'HFP. On peut encore citer les copolymères VF2/HFP/TFE contenant 45 à 65% de VF2, les proportions d'HFP et de TFE étant telles que le rapport en poids HFP/TFE soit entre 1/5 et 5/1 et de préférence 1/2 et 2/1.

Ces élastomères B peuvent être fabriqués par le procédé décrit dans "Composition and séquence distribution of vinylidene fluoride copolymer and terpolymer fluoroelastomers. Détermination by 19F nuclear magnetic résonance spectroscopy and corrélation with some properties."
Maurizio Pianca, Piergiorgio Bonardelli, Marco Tato, Gianna Cirillo and Giovanni Moggi. POLYMER, 1987, Vol. 28, February, 224-230.

Les plastifiants C peuvent être choisis parmi les plastifiants usuels et notamment ceux décrits dans US 3.541.039 et US 4.584.215. De préférence, le plastifiant est choisi parmi le Dibutylsébaçate et le N-n-butylsulfonamide.

Outre les constituants A, B et C décrits ci-dessus, les compositions selon l'invention. peuvent contenir divers additifs et/ou charges et/ou colorants et/ou pigments, organiques ou minéraux, macromoléculaires ou non, bien connus dans la littérature.

A titre d'exemples non limitatifs de charges, on peut citer le mica, l'alumine, le talc, le noir de carbone, les fibres de verre, de carbone, des composés macromoléculaires.

A titre d'exemples non limitatifs d'additifs, on peut citer les agents anti-U.V., les agents ignifugeants, les stabilisants chaleur, les agents de transformation ou « processing aids ».

La somme de ces additifs et charges divers représente en général moins de 20 % de la masse totale A+B+C.

Avantageusement, la préparation des compositions selon l'invention est réalisée par mélange à l'état fondu des composants A, B et C.

La composition selon l'invention peut être préparée par mélange à l'état fondu de l'homopolymère ou du copolymère de vinylidène A avec le ou les élastomères B-initialement sous forme de poudres, de granulés - dans une extrudeuse, un mélangeur à cylindres ou tout type d'appareil de mélange adapté.

Il est également possible de mélanger un latex de d'homopolymère ou de copolymère de vinylidène avec le ou les élastomères sous forme de poudre ou de latex.

Le ou les plastifiants ainsi que les additifs éventuels peuvent être incorporés dans les compositions lors du mélange de A et de B, soit mélangés à l'un ou l'autre de ces constituants préalablement à l'étape de mélange de A et de B, soit postérieurement au mélange de A et de B selon les techniques de mélange énoncées plus haut.

Les compositions selon l'invention peuvent être utilisées pour la réalisation de matériaux soumis à des contraintes dans des conditions de haute et/ou de basse température, au contact de substances particulièrement agressives (telles que hydrocarbures, acides forts, solvants, bases minérales et organiques) au cours desquelles leurs propriétés de résilience et de souplesse sont particulièrement requises.

Comme indiqué plus haut, les compositions selon l'invention sont particulièrement adaptées pour la fabrication de gaines d'étanchéité de conduites métalliques flexibles pour l'extraction et/ou le transport de gaz et d'hydrocarbures dans les industries pétrolière et gazière.

Ces gaines d'étanchéité se présentent en général sous forme de tubes monocouches ou multicouches, fabriqués par extrusion ou co-extrusion dans lesquels on insère ensuite la conduite métallique flexible ou bien formés directement sur la conduite flexible par les techniques usuelles de surgainage.

La composition selon l'invention peut être utilisée dans des gaines d'étanchéité multicouches comme celles qui ont été décrites par exemple dans le brevet US 5601893.

Les compositions selon l'invention sont également bien adaptées pour la réalisation par extrusion de pièces de génie chimique, notamment sous forme de tuyaux, de tubes, ainsi que pour la réalisation d'objets dans le domaine des industries du bâtiment et des travaux publics, tels que gaines de câbles, haubans ainsi que de films et de feuilles mono-ou multicouches pour tout genre d'industrie.

La composition selon l'invention peut être utilisée également dans des gaines de fils, torons, câbles et haubans comme ceux qui ont été décrits dans les demandes de brevet EP 671.502 et EP 671.746.

### Exemples

A l'aide d'une extrudeuse monovis de diamètre 40 mm (L/D = 33 ; taux de compression = 3,5) régulée à 220 °C, on extrude des compositions (Ai Bj Ck x) contenant au moins un des polymères fluorés A4, A5 ou A7, un des élastomères B1, B2, B5 à B7 et le plastifiant C1. Selon les proportions respectives des différents constituants, les compositions sont référencées α, χ,Φ,η et γ.

Le Tableau 1 indique l'indice de fluidité à chaud des polymères fluorés Ai qui sont des homopolymères ou un copolymère de VF2 ainsi que leur module critique Gc ; l'indice de fluidité MFI est mesuré selon la norme ISO 1133 à 230 °C sous une charge de 5 kg et le module critique G_{c} est déterminé à 190 °C à l'aide d'un spectromètre mécanique dynamique, par exemple de type Rheometrics RMS 800, en utilisant un viscosimètre plan-plan de diamètre 25 mm.

Le Tableau 2 indique la nature chimique, la dénomination commerciale et les fournisseurs des élastomères Bj.

Le Tableau 3 indique la nature chimique ainsi que la famille à laquelle appartiennent les plastifiants Ck ; le Tableau 4 indique les proportions pondérales des constituants des compositions illustrées et la référence des compositions correspondantes.

**Tableau 1**

| Nature du polymère | **Homopolymère de VF2** | **Homopolymère de VF2** | **Copolymère de VF2 à 1% en poids de C**_{**2**}**F**_{**3**} **Cl** |
|---|---|---|---|
| N° polymère fluoré | A4 | A5 | A7 |
| MFI (g/10 min) | 0,7 | 0,14 | 0,8 |
| G_{c}(kPa) | 20 | 11 | 21 |

Les homo- ou copolymères de VF2 ont été préparés par les procédés classiques de polymérisation radicalaire en émulsion ou en suspension, tels que décrits dans les demandes de brevets EP 709429, FR 2286153, FR 2610325. Ils peuvent également être préparés en solution ou en masse.

**Tableau 2**

| N° élastomère | Nature élastomère | Dénomination commerciale | Fournisseur |
|---|---|---|---|
| B1 | élastomère acrylique | Durastrength® D 200 | Ceca (France) |
| B2 | élastomère acrylique | Paraloid® E 653 | Rohm et Haas |
| B5 | copolymère VF2/C3F6 60/40 | | |
| B6 | copolymère VF2/C3F6 70/30 | | |
| B7 | copolymère VF2/C3F6/C2F4 48/30/22 | | |

Plus précisément, l'élastomère B1 est un core shell (coeur écorce) à écorce acrylique, il est préparé par polymérisation radicalaire en phase aqueuse de monomères acryliques selon les brevets US 3264373 ou US 3562235.

L'élastomère B2 est un core shell obtenu par polymérisation radicalaire en phase aqueuse. Il est du type MBS c'est à dire que le coeur est un copolymère du butadiène et du styrène et l'écorce est en PMMA.
B5-B7 ont été préparés selon selon le procédé décrit dans l'article cité dans la description.

**Tableau 3**

| N° plastifiant | Type plastifiant | Nature |
|---|---|---|
| C1 | ester | Dibutylsébaçate (DBS) |
| C2 | sulfonamide | N-n-butylsulfonamide (BBSA) |

**Tableau 4**

| N° composition | % polymère fluoré | % élastomère | % plastifiant |
|---|---|---|---|
| α | 95,5 | 2 | 2,5 |
| χ | 93,5 | 4 | 2,5 |
| φ | 90 | 5 | 5 |
| γ | 98 | 2 | 0 |
| η | 96 | 4 | 0 |

On teste les compositions présentées ci-dessus en mesurant la résistance à la traction, au choc IZOD, à la flexion sur feuillard métallique gainé ainsi que la stabilité thermique et chimique.

L'allongement à la traction est mesuré sur des plaques d'épaisseur 0,7 mm préparées à partir des compositions extrudées décrites précédemment et moulées à 205 °C avec une presse à plateaux. Des éprouvettes de traction de type ASTM D 1708 sont découpées à l'aide d'emporte-pièce dans lesdites plaques. L'allongement à la traction (déformation au seuil d'écoulement εy et déformation à la rupture εr) est mesuré selon la norme ASTM D 638 à température ambiante.

La résistance au choc IZOD avec entaille (mesurée à 23 °C et à -30 °C) est pratiquée sur des éprouvettes injectées à 230 °C de dimensions 80*10*4 mm, l'entaillage et le protocole d'essai étant conformes à la norme ISO 180-1982.

La résistance à la flexion sur feuillard métallique gainé est évaluée à température ambiante sur une structure métallique souple (feuillard agrafé de diamètre externe égal à 29 mm) gainée à l'aide des compositions illustrées extrudées avec une tête d'équerre ; la gaine a une épaisseur moyenne de 4 mm, la température d'extrusion lors du gainage étant comprise entre 200 et 250 °C. Le tube ainsi gainé est placé sur deux supports fixes distants de 250 mm. Au moyen d'un galet de cintrage de 80 mm de diamètre, on appuie à équidistance des points d'appui du tube en exerçant une pression suffisante pour provoquer le fléchissement du tube jusqu'à sa rupture. On mesure la hauteur d'enfoncement du galet qui indique l'aptitude à la déformation du tube flexible. Le rapport de la hauteur d'enfoncement mesurée à la rupture à une hauteur maximale d'enfoncement fixée à 160 mm, correspond à la résistance à la flexion sur feuillard métallique gainé.

La stabilité thermique et chimique est appréciée en mesurant la variation de poids Δp entre un échantillon extrudé de 3 mm d'épaisseur et de masse 5 g de composition donnée et un échantillon identique placé pendant 1 mois à 150 °C dans un milieu donné (air ou pétrole(1/3 en volume de cyclohexane, 1/3 isooctane, 1/3 xylène) dont on mesure également l'allongement à la rupture en traction (εy et εr). Un signe - (négatif) correspond à une perte de poids.

La stabilité chimique est appréciée en mesurant la variation de poids Δp entre un échantillon extrudé de 3 mm d'épaisseur et de masse 5 g de composition donnée et un échantillon identique placé pendant 7 jours à 50 °C dans une solution de HCl concentré à 37 % en poids puis rincé à l'eau distillée et étuvé 24 h à 150 °C. Un signe - (négatif) correspond à une perte de poids (tableau 5).

La stabilité thermique et chimique est aussi appréciée en mesurant l'allongement à la rupture et la résistance au choc Charpy à 23°C après vieillissement de 12 mois dans l'air à 150°C (tableau 6).

Tous les résultats sont réunis dans les Tableaux 5 et 6.

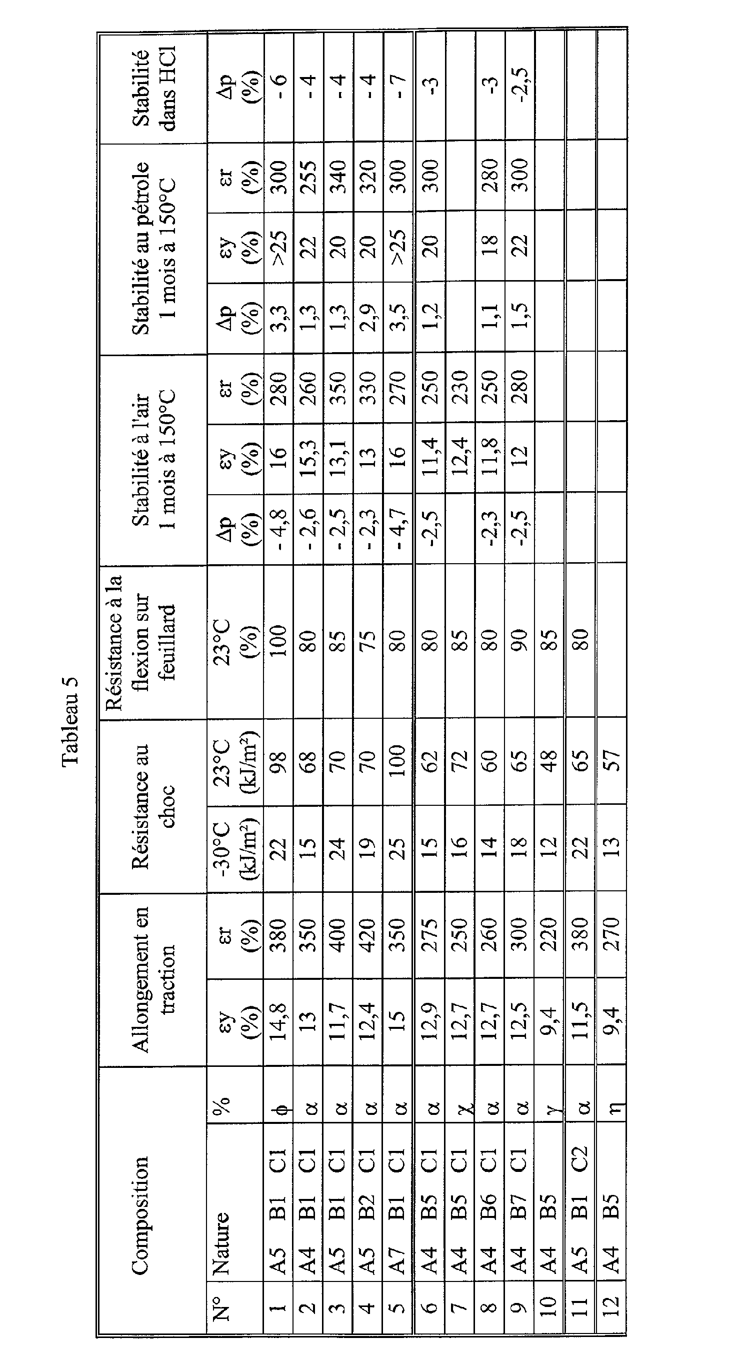

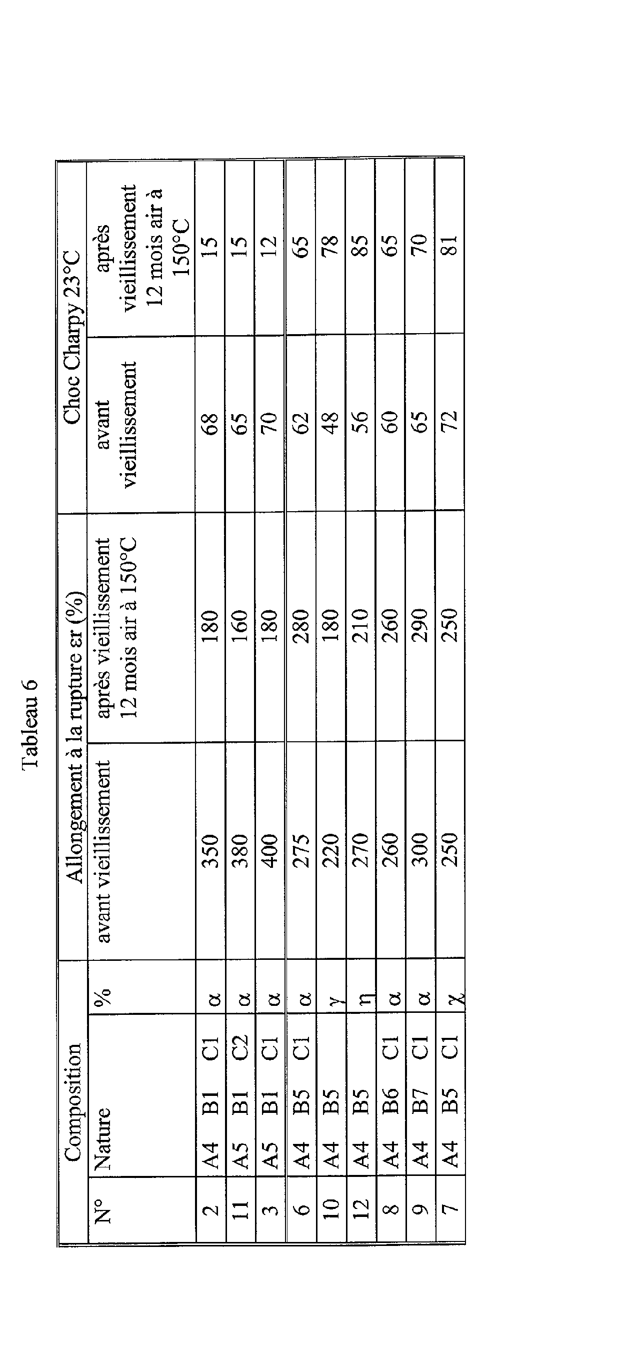

## Revendications

1. Composition souple et résiliente comprenant :
• au moins un homopolymère (A) de fluorure de vinylidène (VF2) ou un copolymère (A) de VF2 et d'au moins un autre monomère copolymérisable avec VF2, dans lequel pour 100 parties en poids de VF2 ledit monomère est présent en une quantité comprise entre 0 et 30 parties en poids,
• au moins un élastomère fluoré B,
• éventuellement un plastifiant C,
dans laquelle, d'une part, ladite composition comprend pour 100 parties en poids de A, de 0,5 à 10 parties en poids de B et de 0 à 10 parties en poids de C, avec la condition supplémentaire que la somme de B plus C soit de 0,5 à 10,5 parties en poids et, d'autre part, en ce que l'homopolymère ou le copolymère de fluorure de vinylidène (A) soit choisi de telle sorte qu'il possède un indice de fluidité, mesuré selon la norme ISO 1133 à 230 °C sous une charge de 5 kg, inférieur à 5 g /10 min et un module critique G_{c}, à l'intersection des modules de cisaillement à l'état fondu G' et G" mesuré à 190°C, compris entre 5 et 22 kPa.

2. Composition selon la revendication 1, dans laquelle ledit autre monomère dans A est présent en une quantité comprise entre 0 à 5 parties en poids.

3. Composition selon la revendication 1 ou 2, dans laquelle ledit autre monomère dans A est un monomère fluoré.

4. Composition selon l'une des revendications 1 à 3, dans laquelle B est présent en une quantité relative de 0,5 à 5 parties en poids.

5. Composition selon l'une des revendications 1 à 4, dans laquelle C est présent en une quantité relative de 0,5 à 5 parties en poids.

6. Composition selon l'une quelconque des revendications précédentes dans laquelle l'élastomère B est choisi parmi les copolymères VF2/HFP dans lesquels les proportions en poids du VF2 sont entre 50 et 75% pour respectivement 50 à 25% d'HFP.

7. Composition selon l'une quelconque des revendications 1 à 5 dans laquelle l'élastomère B est choisi parmi les copolymères VF2/HFP/TFE contenant 45 à 65% de VF2, les proportions d'HFP et de TFE étant telles que le rapport en poids HFP/TFE soit entre 1/5 et 5/1 et de préférence 1/2 et 2/1.
